# EUROPEAN PATENT APPLICATION

(11) **EP 0 999 364 A2**
(43) Date of publication of application: **10.05.2000**
(21) Application number: 99121751.4
(22) Date of filing: 03.11.1999
(51) Int. Cl.: F04B 27/10

(54) **A shaft seal assembly including a drain passage**

(30) Priority: 04.11.1998 JP 31350598
(71) Applicant: Kabushiki Kaisha Toyoda Jidoshokki Seisakusho, Aichi-ken (JP)
(72) Inventor: Sugiura, Manabu, c/o K.K. Toyoda Jidoshokki, Kariya-shi, Aichi-ken (JP); Kondo, Yoshitami, c/o K.K. Toyoda Jidoshokki, Kariya-shi, Aichi-ken (JP)
(74) Representative: Leson, Thomas Johannes Alois, Dipl.-Ing.

(57) **Abstract**

An oil sealing structure having a draining passage (39) for draining oil from a seal assembly (17). The seal assembly (17) is located between a housing (11), and a drive shaft (15). A first seal member (31) contacts the inner wall of the housing (11). A second seal member (33) contacts the drive shaft (15). An oil barrier (37) is located frontward of the first and second seal members (31, 33). The oil barrier (37) extends toward the drive shaft (15). A plurality of drain passages (39) connect the inner side and the outer side of the seal assembly (17) between the oil barrier (37) and the second seal member (33). Oil that leaks past the second seal member is stopped by the oil barrier (37) and is drained to a location outside the seal assembly (17).

## Description

### BACKGROUND OF THE INVENTION

The present invention relates to an oil drain for a shaft seal assembly for compressors used in vehicle air-conditioning systems.

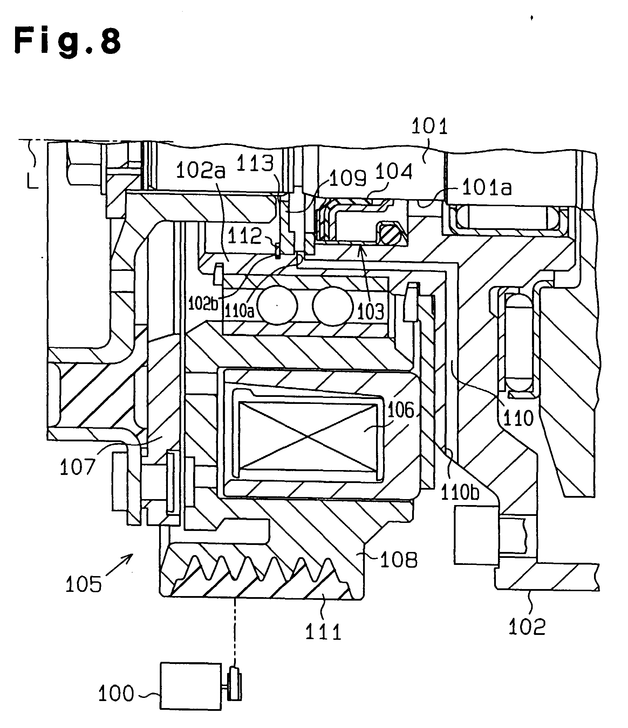

Fig. 8 shows a conventional oil drain system for shaft seal assembly of a compressor. A drive shaft 101 is rotatably supported by bearings in a housing 102, which accommodates a compression mechanism (not shown). The proximal end of the drive shaft 101 is coupled to the compression mechanism and the distal end is located outside the housing 102. A boss 102a is formed on the front of the housing 102 to surround the drive shaft 101. A shaft seal assembly 103 is located between the boss 102a and the drive shaft 101. A lip seal ring 104 of the seal assembly 103 contacts a surface 101a of the drive shaft 101 and seals the space between the boss 102a and the drive shaft 101.

An electromagnetic clutch 105 is located between the drive shaft 101 and a vehicle engine 100. The clutch 105 includes a solenoid core 106 and an armature 107. The armature 107 integrally rotates with the drive shaft 101. When the electromagnet 106 is excited, the armature 17 is attracted to a rotor 108, which is driven by the engine 100. This engages the clutch 105 and rotates the drive shaft 101. As a result, the compression mechanism operates and compresses refrigerant gas.

An oil barrier 109 includes an oil barrier ring 113. The oil barrier ring 113 is located frontward of a seal assembly 103, which is located in the boss 102a. A drain conduit 110 includes an inlet 110a and an outlet 110b. The inlet 110a is located in the boss 102a between the seal assembly 103 and the oil barrier 109. The outlet 110b is formed in the outer surface of the housing 102.

When lubricant oil leaks past the seal assembly 103, the leaked oil is stopped by the oil barrier 109 and is drained to the outside of the housing 102 through the drain conduit 110. Accordingly, oil is prevented from entering the clutch 105. This prevents oil from entering between the armature 107 and the rotor 108 and between the rotor 108 and a belt 111. Therefore, slippage between the armature 107 and the rotor 108 and between the rotor 108 and the belt 111 is prevented and the power from the engine 100 is efficiently transmitted to the drive shaft 101.

However, a barrier ring 113, which is independent from the seal assembly 103, is required to form the oil barrier 109. Further, the prior art oil barrier 109 requires a snap ring 112 for fixing the barrier ring 113 and a groove 102b for receiving the snap ring 112. This increases the number of parts, the manufacturing steps, and the cost. Also, since the seal assembly 103 and the barrier ring 113 are arranged in the direction of the axis L, the axial dimension of the compressor is increased.

### SUMMARY OF THE INVENTION

An objective of the present invention is to provide an inexpensive oil leakage draining structure for a shaft seal assembly.

To achieve the above objective, the present invention provides a seal assembly for sealing between an inner region and an outer region of a rotary machine. The rotary machine has a housing and a rotary shaft. The shaft is rotatably supported by the housing and has a distal end extending to an outer region of the housing. The housing contains lubricant oil. The seal assembly is structured as follows. An outer seal member contacts the housing. An inner seal member contacts the rotary shaft. A barrier extends radially towards the peripheral surface of the rotary shaft. The barrier is arranged at a position nearer to the distal end of the rotary shaft than the inner and the outer seal members. A passage is formed between the barrier and the inner seal member. The passage passes radially through the seal assembly. When the lubricant oil leaks from the housing past the inner seal member, the leaked oil flows through the passage to the outside of the seal assembly.

Other aspects and advantages of the present invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:
Fig. 1 is a partial cross-sectional view showing an oil leakage draining structure of a compressor according a first embodiment of the present invention;
Fig. 2 is an enlarged cross-sectional view of the oil leakage draining structure of Fig. 1;
Fig. 3 is a cross-sectional view taken on the line 3-3 of Fig. 2;
Fig. 4 is an enlarged cross-sectional view of an oil leakage draining structure of a compressor according to a second embodiment;
Fig. 5 is an enlarged cross-sectional view of an oil leakage draining structure of a compressor according to a third embodiment;
Fig. 6 is an enlarged cross-sectional view of an oil leakage draining structure of a compressor according to a fourth embodiment;
Fig. 7 is an enlarged cross-sectional view of another variation of a drain passage; and
Fig. 8 is a prior art oil leakage draining structure of a compressor.

### DETAILED DESCRIPTION OF THE PREFERRED EMBODIMENTS

A first embodiment of the present invention will now be described.

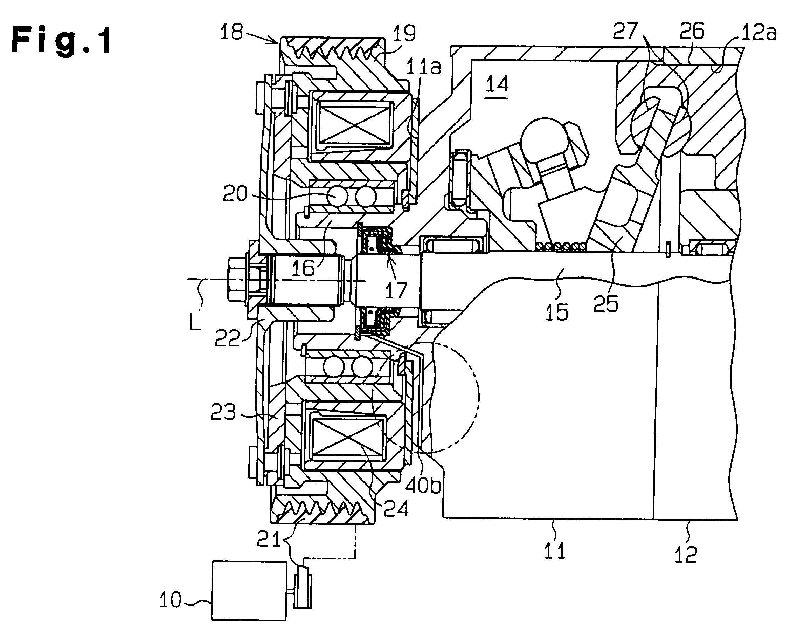

As shown in Fig. 1, a housing of a compressor includes a front housing member 11 and a cylinder block 12. The front housing member 11 is coupled to the front end of the cylinder block 12. A crank chamber 14 is defined by the front housing member 11 and the cylinder block 12.

A drive shaft 15 is rotatably supported by the front housing member and the cylinder block 12. The distal end (left in Fig. 1) of the drive shaft 15 is located outside the front housing 11. A cylindrical boss 16 is formed on the front wall of the front housing member 11 to surround the drive shaft 15. A shaft seal assembly 17 is accommodated in the boss 16 and seals the space between the drive shaft and the boss 16. The drive shaft 15 is connected to a vehicle engine 10 through an electromagnetic clutch 18. The electromagnetic clutch 18 includes a rotor 19, an electromagnet 24 and an armature 23 having a hub 22. The rotor 19 is supported by the boss 16 with an angular bearing 20. The rotor 19 is coupled the engine 10 through a belt 21. The hub 22 is fixed to the distal end of the drive shaft 15. The electromagnet 24 is fixed to a front wall 11a of the front housing member 11 through a support member. The rotor 19 surrounds the electromagnet 24 and rotates with respect to the electromagnet 24. When the electromagnet 24 is excited while the engine 10 is operating, the armature 23 is attracted to the electromagnet 24 against the elastic force of the hub 22 and is pressed against the rotor 19. In this state, the clutch 18 is engaged. When the clutch 18 is engaged, power of the engine 10 is transmitted to the drive shaft 15 through the belt 21 and the clutch 18. When the electromagnet 24 is de-excited, the armature 23 is separated from the rotor 19 by the elastic force of the hub 22, thus disengaging the clutch 18. When the clutch 18 is disengaged, power from the engine 10 is not transmitted to the drive shaft 15.

A swash plate 25 is accommodated in the crank chamber 14 and integrally rotates with the drive shaft 15. Cylinder bores 12a are formed in the cylinder block 12. A piston 26 is accommodated in each cylinder bore 12a to reciprocate. Each piston 26 is coupled to the swash plate 25 through shoes 27. Rotation of the drive shaft 15 and the swash plate 25 is converted into reciprocation of each piston 26 in the corresponding cylinder bore 12a. The reciprocation of each piston 26 compresses refrigerant gas.

The seal assembly 17 and the oil draining structure will now be described.

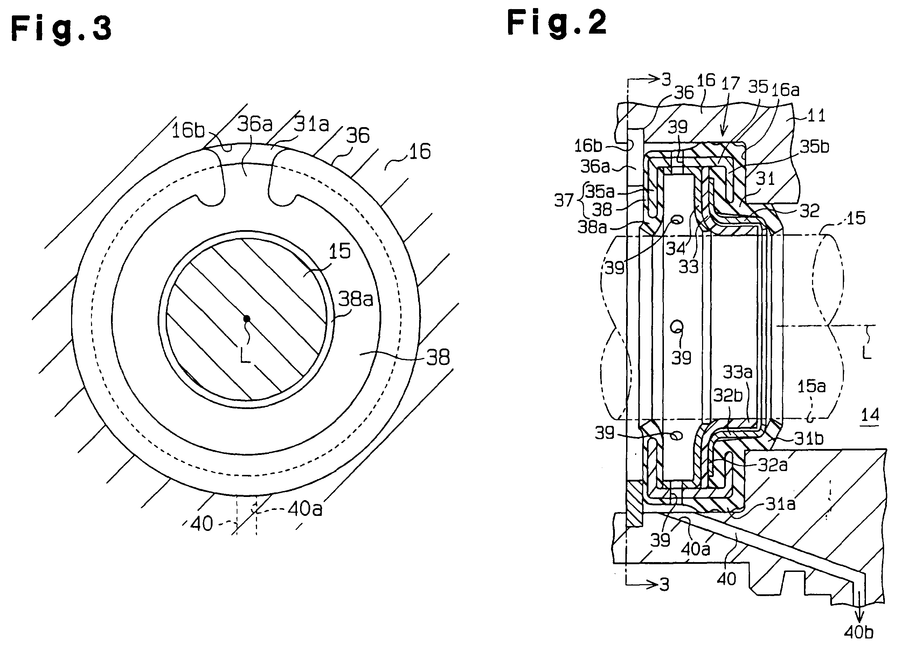

As shown in Fig. 2, a first, or outer, seal member 31, a metal retainer ring 32, a second, or inner, seal member 33, and a metal spacer ring 34 are arranged in this order from right to left in Fig.2, along the axis L. The first seal member 31 and the second seal member 33 are annular and are made of resilient material. The first seal member 31 is preferably made of synthetic rubber, most preferably, acrylonitrilebutadiene. The second seal member 33 is preferably made of fluororesin, most preferably, PTFE (polytetrafluoroethylene). The rings and seal members 31-34 are attached to a core frame 35, which is an annular support. The core frame 35 and the rings 31-34 are accommodated in the boss 16. A positioning member, which, in this embodiment, is a snap ring 36, holds the seal assembly 17 in a predetermined position in the housing 11. An annular snap ring groove 16b is formed in the inner wall of the boss 16. The snap ring 36 is fitted in the snap ring groove 16b. Axial movement of the core frame 35 is limited by a step 16a and the snap ring 36. As shown in Fig. 3, the arcuate snap ring 36 has separate ends and a gap 36a between the ends. The gap 36a is located at the top when the snap ring 36 is fitted in the snap ring groove 16b.

The metal core frame 35 includes a front rim 35a and a rear rim 35b. The front and rear rims 35a, 35b are formed by inwardly bending the ends of a metal cylinder. The first seal member 31 is molded on the rear rim 35b. Annular projections 31a are formed on the peripheral surface of the first seal member 31. The projections 31a contact the inner wall of the boss 16. The first seal member 31 includes an annular first lip 31b. The distal rim of the first lip 31b annularly contacts the surface 15a of the drive shaft 15.

The second seal member 33 is initially annular disc-shaped. When the seal assembly 17 is installed from the front end of the drive shaft 15, the inner part of the second seal member 33 is deformed toward the crank chamber 14. The deformed portion forms an annular second lip 33a. The surface of the second lip 33a annularly contacts the surface 15a of the drive shaft 15.

The retainer ring 32 includes an annular disc 32a and cylindrical portion 32b. The distal end of the cylindrical portion 32b contacts the first lip 31b of the first seal member 31. The retainer ring 32 limits deformation of the lip 31b.

As shown in Fig. 2, a front rim 35a of the core frame 35 and an annular oil barrier packing 38 constitute an oil barrier 37. The oil barrier 37 is located frontward of a portion of the second seal member 33 contacting the drive shaft 15. The barrier packing 38, which is made of resilient material, is molded to the front rim 35a of the core frame 35. The oil barrier packing 38 and the first seal member 31 are molded to the core frame 35 in the same step. The oil barrier packing 38 is preferably made of synthetic rubber such as acrylonitrilebutadiene. The oil barrier packing 38 includes an oil seal lip 38a, which is formed on the radially inner part of the oil barrier packing 38. The oil seal lip 38a is forwardly deformed and contacts the surface 15a of the drive shaft 15.

A spacer ring 34 has a generally L-shaped cross section. The spacer ring 34 forms a predetermined space between the oil barrier 37 and the second seal member 33. Drain passages 39 are formed in a peripheral wall of the seal assembly 17 between the oil barrier 37 and the second seal member 33. Each drain passage 39, which is perpendicular to the axis L of the drive shaft 15, passes through the spacer ring 34, the core frame 35, and the seal members 31, 38. The drain passages 39 are equally spaced from one another in the angular direction.

A drain conduit 40 is formed in the front housing member 11 below the seal assembly 17. An inlet 40a of the drain conduit 40 is formed at the lowest position in the inner wall of the boss 16 between the snap ring 36 and the step 16a. One of the drain passages 39 is preferably facing the inlet 40a. An outlet 40b of the drain conduit 40 is formed in the peripheral surface of the front housing member 11 below the inlet 40a.

Operation of the seal assembly 17 and the oil leakage draining structure will now be described.

When the drive shaft 15 is rotating, or when the compressor is operating, relatively high pressure in the crank chamber 14 is applied to the seal assembly 17, which presses the second lip 33a of the second seal member 33 against the surface 15a of the drive shaft 15. As a result, leakage of fluid (refrigerant gas and lubricant oil) from the crank chamber 14 is prevented. When the drive shaft 15 is not rotating, or when the compressor is not operating, the first lip 31b of the first seal member 31 resiliently contacts the surface 15a of the drive shaft 15, which prevents leakage of fluid from the crank chamber 14.

When the drive shaft 15 is rotating, fluid (mainly lubricant oil in the refrigerant gas) from the crank chamber 14 leaks between the first lip 31b of the first seal member 31 and the surface 15a of the drive shaft 15. The oil leakage lubricates the between the seal assembly 17 and the drive shaft 15 and cools the first lip 31b and the inner surface of the second lip 33a. Since the first lip 31b is supported by the cylindrical portion 32b of the retainer ring 32, proper contact of the first lip 31b with the surface 15a of the drive shaft 15 is maintained when high pressure in the crank chamber 14 is applied to the first seal member 31. As a result, a lack of oil between the seal assembly 17 and the drive shaft 15 is prevented. Accordingly, wear of the first lip 31b and the second lip 33a from friction and high temperature is prevented. This improves the durability of the first and second seal members 31, 33.

When a foreign particle enters between the second seal member 33 and the drive shaft 15, the sealing performance of the seal assembly 17 is lowered, which may permits leakage of lubricant oil from the compressor. The leaked oil tends to move toward the electromagnetic clutch 18 past the boss 16. However, the oil barrier 37 prevents the axial flow of oil. Oil stopped by the oil barrier 37 is drained to a location outside the seal assembly 17 through one or more of the drain passages 39. Oil drained from the seal assembly 17 is prevented from moving frontward by the contact between the seal assembly 17 and the snap ring 36. Therefore, oil is guided to a location outside the housing members 11, 12 through the drain conduit 40. This prevents oil from entering the clutch 18. Accordingly, slippage between the armature 23 and the rotor 19 and between the rotor 19 and the belt 21 is prevented. As a result, power from the engine 10 is efficiently transmitted to the drive shaft 15. Oil moves downward in the drain conduit 40 by gravity.

The first embodiment has the following advantages.
(1) The seal assembly 17 integrally includes the oil barrier 37. Accordingly, the oil barrier is located in the boss 16 by installing the seal assembly 17 in the boss 16. Further, the oil barrier ring 113, the snap ring 112 for fixing the oil barrier ring 113 in the boss 102a, and the groove 102b for receiving the snap ring 112 in the prior art are not required. As a result, the oil leakage draining structure is easily and inexpensively formed. Also, omission of the additional snap ring 112 and the groove 102b reduces the axial dimension of the compressor.
(2) Since the oil barrier packing 38 is simultaneously molded with the first seal member 31, the number of manufacturing steps is reduced. This further reduces the manufacturing cost of the oil leakage draining structure.
(3) Some of the oil that leaks past the second seal member 33 tends to move toward the clutch 18. However, the oil barrier packing 38 resiliently contacts the surface 15a of the drive shaft 15 and stops the flow of oil toward the clutch 18.
(4) Since the drain passages 39 are formed in the seal assembly 17, one of the drain passages 39 is located near the inlet 40a of the drain conduit 40 when the seal assembly 17 is installed in the boss 16. Accordingly, it is not necessary to determine the circumferential position of the seal assembly at installation, which facilitates installation. The drain passages 39 that are not located near the inlet 40a serve as air holes and connect the space between the oil barrier packing 38 and the second seal member 33 to the outside of the seal assembly 17. Accordingly, oil is smoothly drained from the seal assembly 17 through the drain passages 39 by admitting air into the seal assembly through the air passages 39.
(5) The snap ring 36 cannot block oil at the location of the gap 36a. However, in the first embodiment, the gap 36a is located at the top when the snap ring 36 is fitted in the snap ring groove 16b. Therefore, oil that drains from the drain passages 39 does not leak through the gap 36a and instead moves to the drain conduit 40. The gap 36a may be located at any position except for the bottom position. The gap 36a is preferably positioned above the axis L of the shaft 15.

Second to fourth embodiments will now be described concentrating on differences from the first embodiment. Parts in these embodiments have the same reference numbers as the corresponding parts of the first embodiment.

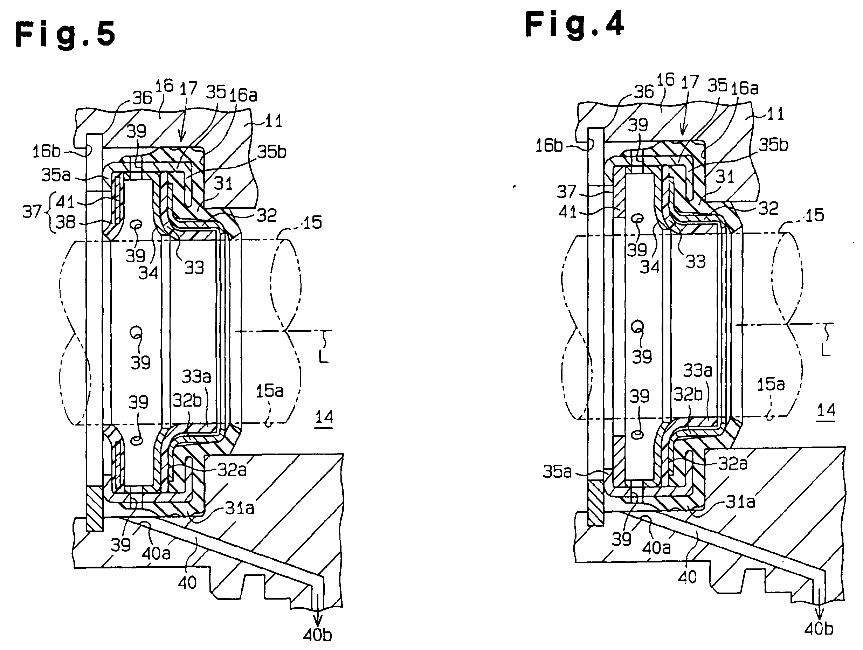

Fig. 4 shows an oil leakage draining structure according to a second embodiment. The oil barrier 37 of the second embodiment is different from that of the first embodiment. The oil barrier 37 includes a metal barrier ring 41, which is shaped like an annular disc. The oil barrier ring 41 is located rearward of the front rim 35a of the core frame 35. The inner rim of the oil barrier ring 41 does not contact the drive shaft 15. The oil barrier ring 41 is located frontward of the spacer ring 34.

The second embodiment has the advantages (1, 4, 5) of the first embodiment. In addition, the design flexibility of the seal assembly 17 is increased because the oil barrier ring 41 independently forms the oil barrier 37. The oil barrier 37 may be made of metal or resin material that is different from that of the core frame 35.

Fig. 5 shows an oil leakage draining structure according to a third embodiment. An oil barrier 37 of the third embodiment is different from those of the first and second embodiments. The oil barrier 37 include the oil barrier ring 41 and the barrier packing 38. The oil barrier ring 41 is a metal annular disc. The oil barrier packing 38 is molded to the outer surface of the oil barrier ring 41. The oil barrier packing 38 is made of synthetic rubber such as acrylonitrilebutadiene rubber.

The third embodiment has the advantages (1, 3-5) of the first embodiment and the advantages of the second embodiment. Since the oil barrier ring 41 is independent from the core frame 35, the oil barrier packing 38 and the first seal member 31 are independently molded. Accordingly, the oil barrier packing 38 and the first seal member 31 can be made of different synthetic rubbers, which increases the design flexibility of the seal assembly 17.

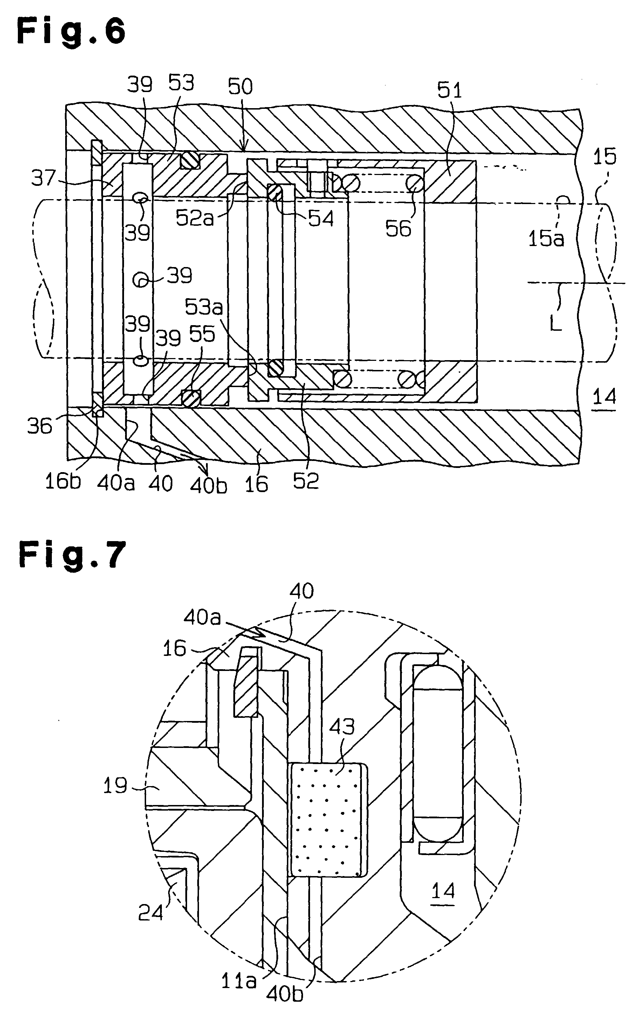

Fig. 6 shows an oil leakage draining structure according to a fourth embodiment. In the fourth embodiment, a cylindrical mechanical seal 50 is employed as a seal assembly. The mechanical seal 50 includes a first ring 51, a second ring 52, and a third ring 53. The first ring 51, the second ring 52, and the third ring 53 are arranged in this order along the drive shaft 15 as shown in Fig. 6, where the front of the compressor is to the left side of Fig. 6. The first ring 51 is fixed to the drive shaft 15. The second ring 52 can integrally rotate with the first ring 51 and can slide along the axis L with respect to the first ring 51. The third ring 53 is accommodated in the boss 16. A snap ring 36, which is fitted in the snap ring groove 16b, prevents the third ring 53 from moving forward (leftward in Fig. 6) along the axis L.

The second ring 52 includes an inner O-ring 54. The inner O-ring 54 seals the space between the second ring 52 and the drive shaft 15. The third ring 53 includes an outer O-ring 55. The third ring 53 thus serves as an annular support. The outer O-ring 55 seals the space between the third ring 53 and the inner wall of the boss 16. A spring 56 is located between the first ring 51 and the second ring 52 and urges the second ring 52 toward the third ring 53. Accordingly, a surface 52a of the second ring 52 is pressed against a surface 53a of the third ring 53, and the front end of the third ring 53 is pressed against the snap ring 36. In this manner, the mechanical seal 50 seals the space between the surface 15a of the drive shaft 15 and the inner wall of the boss 16.

The third ring 53 includes an oil barrier 37. The oil barrier 37 extends toward the drive shaft 15 from the front rim of the third ring 53. The drain passages 39, which are through holes, are formed in the peripheral wall of the mechanical seal 50 between the oil barrier 37 and the outer O-ring 55.

In the fourth embodiment has the advantages (1, 4, 5) of the first embodiment. Also, the oil barrier 37 is integrally formed with the third ring 53, which facilitates formation of the oil barrier 37 and does not increase the number of parts.

The first to fourth embodiments may be varied as follows.

As shown in Fig. 7, an oil absorber 43, which is made of felt, may be provided in the drain passage in the first to fourth embodiments. The oil absorber 43 absorbs oil and prevents oil leakage from the housing members 11, 12. This prevents dispersion of leaked oil in the engine compartment of a vehicle. When the oil absorber becomes saturated, oil flows out of the housing members 11, 12 through the drain conduit 40.

In any of the illustrated embodiments, oil leakage may be forced out of the seal assembly 17 to the drain conduit 40 by a negative pressure generated by the engine or a suction pump. In this case, the relative positions of the drain passages 39 and the drain conduit 40 and the relative positions of the inlet 40a and the outlet 40b can be varied, which increases the design flexibility.

The present invention may also be applied to a clutchless compressor. In this case, oil is prevented from entering between the pulley and the belt 21, which maintains efficient power transmission.

The present invention may also be embodied in a hydraulic pump for power steering, an air pump for an air suspension system, or a compressor for home air-conditioning or refrigerators.

It should be apparent to those skilled in the art that the present invention may be embodied in many other specific forms without departing from the spirit or scope of the invention. Therefore, the present examples and embodiments are to be considered as illustrative and not restrictive and the invention is not to be limited to the details given herein, but may be modified within the scope and equivalence of the appended claims.

An oil sealing structure having a draining passage (39) for draining oil from a seal assembly (17). The seal assembly (17) is located between a housing (11) and a drive shaft (15). A first seal member (31) contacts the inner wall of the housing (11). A second seal member (33) contacts the drive shaft (15). An oil barrier (37) is located frontward of the first and second seal members (31, 33). The oil barrier (37) extends toward the drive shaft (15). A plurality of drain passages (39) connect the inner side and the outer side of the seal assembly (17) between the oil barrier (37) and the second seal member (33). Oil that leaks past the second seal member is stopped by the oil barrier (37) and is drained to a location outside the seal assembly (17).

## Claims

1. A seal assembly (17) for sealing between an inner region and an outer region of a rotary machine, the rotary machine having a housing (11) and a rotary shaft (15), the shaft being rotatably supported by the housing (11), wherein the shaft (15) has a distal end extending to an outer region of the housing, and wherein the housing contains lubricating oil, the seal assembly **characterized by**:
an outer seal member (31;55) that contacts the housing;
an inner seal member (33;54) that contacts the rotary shaft;
a barrier (37) extending radially towards the peripheral surface of the rotary shaft, wherein the barrier is arranged at a position nearer to the distal end of the rotary shaft than the inner and the outer seal members (31, 33; 54, 55); and
a passage (39) formed between the barrier and the inner seal member, wherein the passage passes radially through the seal assembly, wherein when the lubricating oil leaks from the housing past the inner seal member (33;54), the leaked oil flows through the passage (39) to the outside of the seal member.

2. The seal assembly according to claim 1 **characterized in that** the outer and inner seal members are formed of resilient material.

3. The seal assembly according to claim 2 **characterized in that** the outer seal member is made of synthetic rubber and the inner seal member is made of fluororesin.

4. The seal assembly according to claim 2 **characterized in that** a rigid core (35) is embedded in the outer seal member, and the barrier is formed integrally with the core.

5. The seal assembly according to claim 4 **characterized in that** the barrier is an annular member joined to the core.

6. The seal assembly according to claim 1 **characterized in that** the barrier includes an annular core member (35a) and a seal (38) made of elastic material, the seal (38) being attached to the annular core member, wherein an inside edge (38a) of the seal contacts the surface (15a) of the rotary shaft.

7. The seal assembly according to claim 1 **characterized by** a positioning member (36) for positioning the seal assembly (17) at a predetermined position in the housing, wherein the positioning member is attached to the housing.

8. The seal assembly according to claim 1 **characterized in that** the leaked oil flows to the outside (40b) of the seal assembly via a drain conduit (40) formed in the housing, wherein the drain conduit have an entrance (40a) formed between the positioning member (36) and the outer seal member (31).

9. The seal assembly according to claim 8 **characterized by** an oil absorbing member (43) arranged in the drain conduit, wherein the oil absorbing member absorbs the leaked oil.
